# EUROPÄISCHE PATENTSCHRIFT

(11) **EP 2 894 746 B1**
(45) Veröffentlichungstag und Bekanntmachung des Hinweises auf die Patenterteilung: **26.02.2020**
(21) Anmeldenummer: 14150878.8
(22) Anmeldetag: 13.01.2014
(51) Int. Cl.: H02P 29/64, G01K 7/42, H02H 6/00, H02H 7/085

(54) **Verfahren und Vorrichtung zur Temperaturüberwachung eines Elektromotors**
Method and device for monitoring the temperature of an electric motor
Procédé et dispositif de surveillance de température d'un moteur électrique

(43) Veröffentlichungstag der Anmeldung: 15.07.2015
(73) Patentinhaber: Siemens Aktiengesellschaft, 80333 München (DE)
(72) Erfinder: Nemeth-Csoka, Mihaly, 91056 Erlangen (DE); Neudeck, Michael, 91056 Erlangen (DE); Wieser, Norbert, 91322 Gräfenberg (DE)

(56) Entgegenhaltungen:
- EP-A2- 1 858 131
- WO-A1-01/54246
- DE-A1- 19 725 267
- Schmidt-Walter, H.: "Gleichstrommaschinen", , 23. August 2010 (2010-08-23), XP002724904, Gefunden im Internet: URL:http://schmidt-walter.eit.h-da.de/m_et /skript_pdf/em_3.pdf [gefunden am 2014-05-23]
- Anonym: "Gleichstrommaschine", Wikipedia, Die freie Enzyklopädie , XP002724905, Gefunden im Internet: URL:http://de.wikipedia.org/wiki/Gleichstr ommaschine [gefunden am 2014-05-23]

## Beschreibung

Die Erfindung betrifft ein Verfahren zur Überwachung eines Elektromotors sowie eine nach dem Verfahren arbeitende Vorrichtung in Form einer Steuerungseinrichtung oder dergleichen.

Die Temperatur eines Elektromotors (im Folgenden mitunter auch nur kurz als Motor bezeichnet) muss bekanntlich im Betrieb unter einem bestimmten Grenzwert gehalten werden. Ein Motor weist mehrere Stellen auf, an denen sich eine zu hohe Temperatur ungünstig oder schädlich auswirkt. Dazu gehören zum Beispiel die Wicklungen, die Lager, die Magnete oder der Kommutator. Besondere Bedeutung hat die Einhaltung eines jeweils zulässigen Temperaturgrenzwerts oder ggf. auch mehrerer unterschiedlicher Temperaturgrenzwerte aufgrund der davon direkt abhängigen Lebensdauer der Isolierung. Mit der Temperaturabhängigkeit der Lebensdauer der Isolierung ist die Lebensdauer des Motors insgesamt direkt mit der sich im Betrieb jeweils einstellenden Temperatur (Betriebstemperatur) korreliert.

Herkömmlich wird die Temperatur eines Elektromotors mittels zumindest eines Temperatursensors (KTY, PTC, usw.) erfasst und gemessen. Solche Sensoren sind an denjenigen Stellen des Motors angebracht, an denen sich erfahrungsgemäß die höchsten Temperaturen einstellen, also zum Beispiel am Wickelkopf.

Zur Reduktion der Herstellungskosten eines Elektromotors ist derzeit der Trend zu beobachten, dass vor allem bei kleineren Motoren, also Motoren bis zu einer Nennleistung in der Größenordnung von 10 kW, auf eine direkte Messung der Temperatur verzichtet wird. Auf diese Weise können der jeweilige Temperatursensor, Mittel zu dessen Befestigung, dessen Verkabelung inklusive Stecker oder dergleichen und eine Isolierung des Sensors, die Verkabelung sowie die Montage und Funktionsprüfung des Temperatursensors eingespart werden. Bei diesem Ansatz tritt an die Stelle einer direkten Temperaturmessung ein Motortemperaturmodell, das auf jeweils geschätzten Verlustleistungen basiert. Mittels des Motortemperaturmodells wird aus bekannten Größen, wie Strom, Spannung, Frequenz usw., die Temperatur an zumindest einer Stelle des Motors berechnet. Dabei werden allerdings einzelne Umgebungseinflüsse, wie zum Beispiel Umgebungstemperatur, Effektivität der Lüftung, eine mit der Zeit geänderte Wärmeabgabefähigkeit des Elektromotors usw. nicht direkt überwacht, sondern nur auf Basis von Annahmen berücksichtigt. Ändert sich mindestens einer dieser Umgebungseinflüsse in größerem Umfang kann das Modell der tatsächlichen Motortemperatur nicht mehr in ausreichendem Maße folgen und ein wirksamer Schutz des Elektromotors vor Überhitzung ist eventuell nicht mehr zuverlässig gewährleistet.

Beispielhaft kann insoweit auf eine Situation verwiesen werden, bei welcher der Lüfter eines Elektromotors ausfällt, wobei der Betriebszustand des Lüfters vom Modell nicht berücksichtigt und entsprechend der Ausfall des Lüfters auch nicht erkannt wird. Eine Ermittlung der Motortemperatur auf Basis eines Temperaturmodells berücksichtigt dann weiterhin nur die jeweiligen Verlustleistungen, ohne dass erkannt wird, dass die Wärmeleitfähigkeit zwischen dem Elektromotor und der Umgebung wegen des ausgefallenen Lüfters stark gesunken ist. Die aufgrund des Temperaturmodells berechneten Temperaturwerte erreichen dann einen Wert, bei dem ansonsten ein Alarm, eine Abschaltung oder eine Reduktion der Leistungsaufnahme erfolgt, gerade nicht. Der Motor läuft also kontinuierlich weiter und im Inneren des Motors entwickeln sich beträchtliche Temperaturen, die durchaus zu einer Zerstörung des Motors sowie zu Rauch- und Brandgefahren führen können.

Eine Aufgabe der Erfindung besteht ausgehend von der soeben skizzierten Situation darin, ein Verfahren und eine nach dem Verfahren arbeitende Vorrichtung anzugeben, mit dem bzw. der auf einfache und kostengünstige Art und Weise eine Temperaturüberwachung eines Elektromotors möglich ist.

Diese Aufgabe wird erfindungsgemäß mit einem Verfahren zur Überwachung eines Elektromotors mit den Merkmalen des Anspruchs 1 gelöst. Dabei ist die an dem Elektromotor anliegende Klemmspannung bekannt.

Aus einer jeweiligen Motordrehzahl und einem magnetischen Fluss im Elektromotor wird eine induzierte Spannung ermittelt. Mit einer Differenz aus der ermittelten induzierten Spannung und der Klemmspannung sowie einem von dem Elektromotor jeweils aufgenommenen Strom wird sodann ein Stator- oder Ankerwiderstand (eine Stator- oder Ankerimpedanz) des Elektromotors ermittelt. Der so ermittelte Stator- oder Ankerwiderstand (Impedanz) wird mit einem entsprechenden Widerstandswert verglichen, wie es sich bei einer Nenntemperatur des Elektromotors ergibt, wobei sich der Elektromotor in einem unerlaubten Zustand befindet, wenn der ermittelte Stator- oder Ankerwiderstand den Widerstandswert bei der Referenztemperatur um ein vorgegebenes oder vorgebbares Maß überschreitet. Wenn der ermittelte Widerstand den Widerstandswert bei einer Referenztemperatur (z.B. Nenntemperatur) um ein vorgegebenes oder vorgebbares Maß überschreitet, wird dies als Übertemperatursituation ausgewertet und ein Alarmsignal ausgelöst und/oder der Elektromotor abgeschaltet.

Die oben genannte Aufgabe wird auch mit einer Steuerungseinrichtung für einen Elektromotor, zum Beispiel einer Steuerungseinrichtung in Form eines insbesondere digitalen Stromrichters, gelöst, die nach dem Verfahren wie hier und im Folgenden beschrieben arbeitet und dazu Mittel zur Durchführung des Verfahrens umfasst. Die Erfindung ist dabei bevorzugt in Software oder Firmware implementiert. Speziell bei einer Implementation in Software ist die Erfindung damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine Steuerungseinrichtung oder ein Antriebssystem, in deren bzw. dessen Speicher als Mittel zur Durchführung des Verfahrens und seiner Ausgestaltungen ein solches Computerprogramm geladen oder ladbar ist.

Die Erfindung geht von der Erkenntnis aus, dass bei Motoren mit Temperatursensoren von einem zuverlässigen Schutz ausgegangen werden kann. Selbst wenn der Temperatursensor fehlerhaft oder das Sensorkabel beschädigt ist, wird durch einen ungewöhnlichen Messwert ein Fehlerfall erkannt. Falls kein Temperatursensor im Motor vorhanden ist, muss ein zusätzlicher Sensor an der Oberfläche, in der Umgebung oder im Positionssensor installiert werden. Eine optionale Lüfterüberwachung kann ebenfalls benutzt werden. Auf jeden Fall sind solche zusätzlichen Maßnahmen mit Kosten verbunden. Kleine Motoren können diese Kosten immer weniger tragen. Diese Kosten sind aber mit dem hier vorgestellten Ansatz vermeidbar.

Der Vorteil der Erfindung besteht darin, dass das vorgeschlagene Verfahren und die nach dem Verfahren arbeitende Vorrichtung Schutz gegen Rauch und Brand bei Überhitzung eines Elektromotors auch dann gewährt, wenn kein Temperatursensor angeschlossen ist. Dabei tritt der Schutz der Umgebung in den Vordergrund und ein Schutz des Motors eher in den Hintergrund.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: einen Elektromotor mit einem Starkstromanschluss und einem Temperatursensoranschluss,
- FIG 2: einen Elektromotor ohne Temperatursensoranschluss und entsprechend ohne Temperatursensor,
- FIG 3: ein Temperaturmodell zur Schätzung der Motortemperatur bei Elektromotoren ohne Temperatursensor und
- FIG 4: eine Ausführungsform eines Elektromotors mit einem Stromrichter, wobei der Stromrichter Mittel zur Temperaturüberwachung eines Elektromotors umfasst.

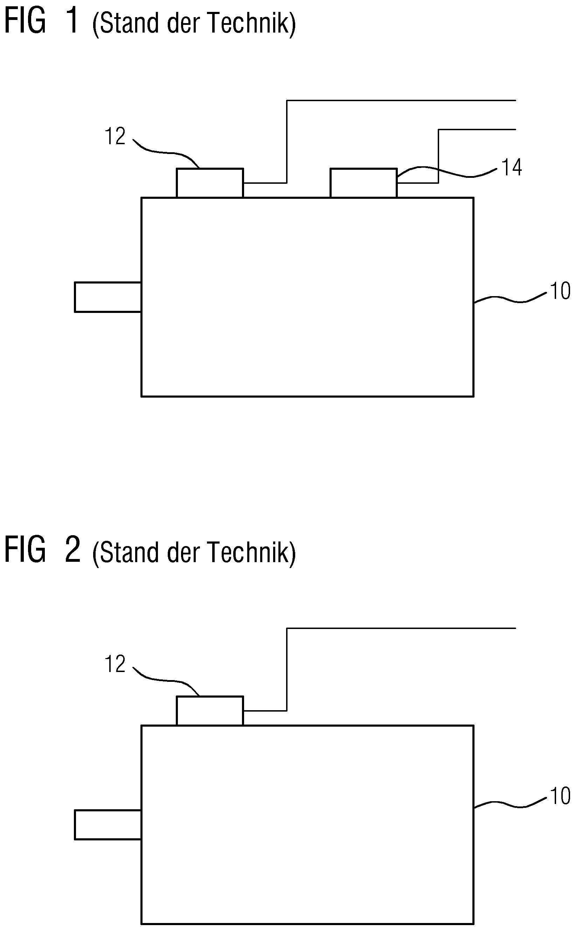

FIG 1 zeigt eine schematisch vereinfachte Darstellung eines im Folgenden mitunter auch nur kurz als Motor bezeichneten Elektromotors 10. Der gezeigte Motor 10 umfasst einen Starkstromanschluss 12 und einen Temperatursensoranschluss 14 (Sensoranschluss). Solche Motoren 10 sind an sich bekannt und mittels eines im Motor 10 in ebenfalls an sich bekannter Art und Weise angebrachten Temperatursensors (nicht gezeigt) kann beim Betrieb des Motors 10 zumindest ein Temperaturwert erfasst werden, der über den Sensoranschluss 14 extern überwacht werden kann, um zum Beispiel einen Alarm auszulösen oder den Motor 10 abzuschalten.

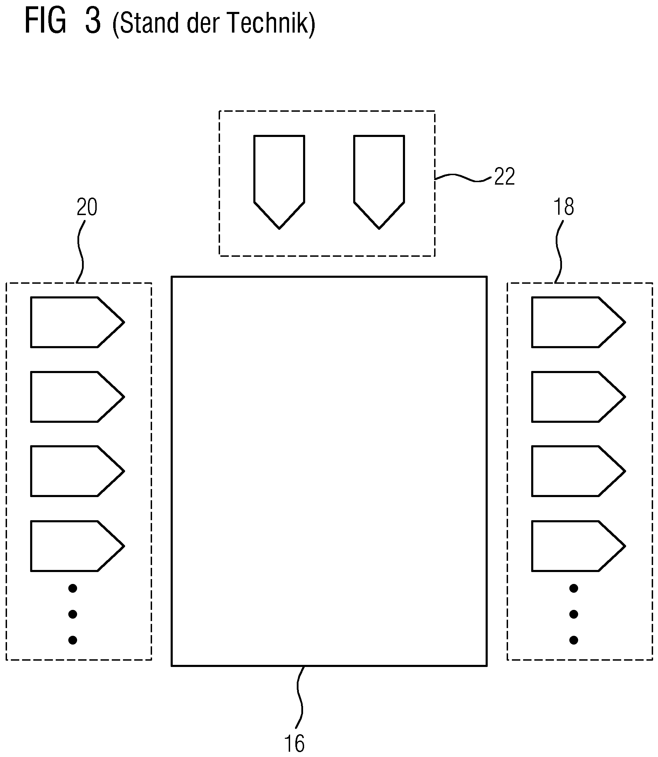

Die Darstellung in FIG 2 zeigt einen Elektromotor 10 gemäß FIG 1 in einer heute aus Kostengründen oftmals verwendeten Ausführungsform, speziell für Leistungsklassen in der Größenordnung bis etwa 10 kW. Dieser Motor 10 umfasst keinen Temperatursensor und entsprechend auch keinen Sensoranschluss 14 (FIG 1). Zur Überwachung der Motortemperatur wird vielmehr - in ebenfalls an sich bekannter Art und Weise - ein Temperaturmodell verwendet, das im Folgenden anhand von FIG 3 kurz erläutert wird.

FIG 3 ist eine schematisch stark vereinfachte Darstellung eines Motortemperaturmodells 16 zur Temperaturüberwachung eines Elektromotors 10, wobei eine Implementation eines solchen Motortemperaturmodells 16 (üblicherweise in Soft- und/oder Firmware) bei der Darstellung in FIG 3 im Zentrum gezeigt ist. Das Motortemperaturmodell 16 liefert beim Betrieb des jeweiligen Motors 10 (FIG 2) Modelltemperaturen 18, zum Beispiel eine Gehäusetemperatur, eine Wicklungstemperatur, eine Rotortemperatur, eine Lagertemperatur usw. Dafür verarbeitet das Motortemperaturmodell 16 Mess- und Vorgabewerte 20, zum Beispiel zum aufgenommenen Strom, zur anliegenden Spannung, zur Drehzahl usw., sowie Parameter 22, zum Beispiel Umgebungsparameter, wie insbesondere die Umgebungstemperatur, und Motorparameter.

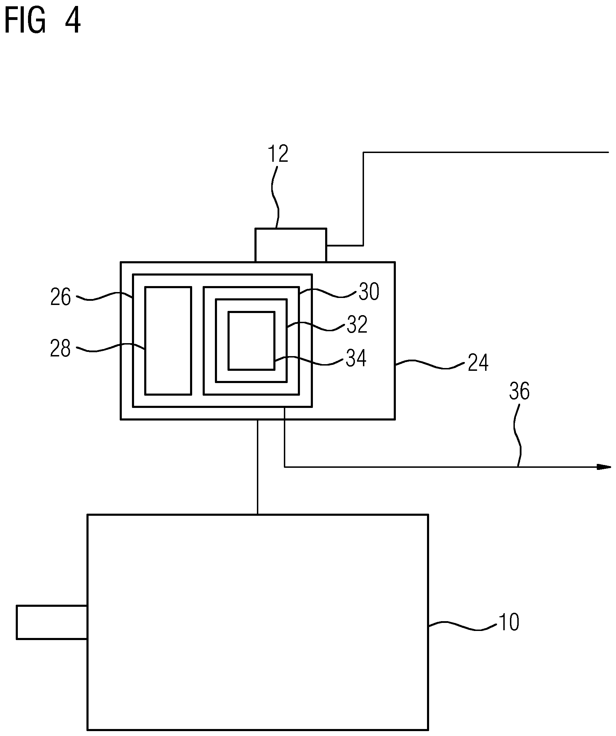

Die Darstellung in FIG 4 illustriert den hier vorgeschlagenen Ansatz. Der gezeigte Elektromotor 10 wird - wie dies häufig der Fall ist - mittels einer Steuerungseinrichtung, zum Beispiel einer Steuerungseinrichtung in Form eines digitalen Stromrichters 24, gesteuert/geregelt. In der jeweiligen Steuerungseinrichtung, also zum Beispiel in einem Stromrichter 24, ist es möglich, verschiedene Signale auszuwerten und auf deren Basis Algorithmen zur Schätzung zumindest eines Motortemperaturwerts abzuleiten. Dies wird im Folgenden mit einzelnen Details weiter erläutert. Die Beschreibung gilt sowohl für Gleich- als auch für Dreh- oder Wechselstrommotoren.

Für die Steuerung/Regelung des jeweiligen Motors 10 mittels einer von der Steuerungseinrichtung bzw. dem Stromrichter 24 umfassten Steuerungseinheit 26 ist in der Steuerungseinrichtung bzw. im Stromrichter 24 die Klemmenspannung des Motors 10 bekannt. Genauso bekannt ist die jeweilige Drehzahl des Motors 10. Aus der Drehzahl und dem magnetischen Fluss im Motor (Motorfluss) kann die induzierte Spannung berechnet werden. Im stationären Zustand ist der Unterschied zwischen der Klemmenspannung und der induzierten Spannung diejenige Spannung, welche an der Stator- oder Ankerimpedanz abfällt. Da in der Steuerungseinrichtung bzw. im Stromrichter 24 der jeweils aufgenommene Strom ebenfalls bekannt ist, kann der jeweilige Widerstandswert berechnet werden. Der berechnete Widerstandswert ist temperaturabhängig, denn bekanntlich erhöht sich der spezifische Widerstand von Kupfer bei einer Erhöhung der Temperatur um 100°C um 40%. Der berechnete Widerstandswert ist damit also ein Maß für die im Motor 10 herrschende Temperatur.

Als Mittel zur Ausführung solcher Berechnungen und damit als Mittel zur Temperaturüberwachung des Motors 10 sowie zur Ausführung des hier vorgeschlagenen Verfahrens kommt die Steuerungseinheit 26 in Betracht. Diese umfasst in an sich bekannter Art und Weise eine Verarbeitungseinheit 28 in Form von oder nach Art eines Mikroprozessors sowie einen Speicher 30, in den ein Steuerungsprogramm 32 geladen ist. Das Steuerungsprogramm 32 wird beim Betrieb des Stromrichters 24 und damit beim Betrieb des Motors 10 durch die Verarbeitungseinheit 28 ausgeführt. Das Steuerungsprogramm 32 umfasst zur Steuerung und/oder Regelung eines Elektromotors 10 eine Implementation der üblichen Funktionalität eines Stromrichters 24 oder einer sonstigen Steuerungseinrichtung. Bei der hier gezeigten Ausführungsform umfasst das Steuerungsprogramm 32 ein Temperaturberechnungsmodul 34, welches Computerprogrammanweisungen zur Berechnung des temperaturabhängigen Widerstandswerts umfasst. Die Berechnung des Widerstandswerts erfolgt dabei in der oben skizzierten Art und Weise. Das Temperaturberechnungsmodul 34 ist also ein Beispiel für eine Implementation des hier beschriebenen Verfahrens in Software, also ein Computerprogramm 34 mit Programmcodemitteln, um alle hier beschriebenen Verfahrensschritte durchzuführen, wenn das Computerprogramm 34 auf einer Steuerungseinrichtung für einen Elektromotor 10 ausgeführt wird. Eine äquivalente Realisierungsmöglichkeit besteht in einer Implementation des hier beschriebenen Verfahrens in Firmware. Das Temperaturberechnungsmodul 34 und die Steuerungseinheit 26 sind demgemäß Mittel zur Ausführung des Verfahrens.

Wenn sich beim Betrieb des Motors 10 aufgrund einer entsprechenden Verarbeitung durch das Temperaturberechnungsmodul 34 ein berechneter Widerstand ergibt, der wesentlich größer ist (z.B. doppelt so groß) als der Widerstand bei Nenntemperatur des Motors 10, kann dies als unerlaubter Zustand ausgewertet werden, bei welchem die Motortemperatur zu hoch ist. Dann werden zum Beispiel ein Alarm sowie ein entsprechendes Alarmsignal 36 ausgelöst und/oder es erfolgt eine automatische Abschaltung des Motors oder eine Reduktion der Leistungsaufnahme. Bei den vom Temperaturberechnungsmodul 34 ausgeführten Berechnungen kann optional zusätzlich auch der Widerstand der Motorleitung berücksichtigt werden.

Ein Motorbetrieb ohne Temperatursensor kommt speziell für kleine Motoren/Maschinen 10 in Betracht, weil dort die aufgrund des nicht notwendigen Temperatursensors eingesparten Kosten besonders ins Gewicht fallen. Gerade bei kleinen Motoren 10 ist aber der überwachte Widerstand auch groß genug, um aus diesem auch bei größeren Drehzahlen sinnvolle Spannungsunterschiede zu berechnen.

Das Verfahren ist sehr robust gegen Parameterungenauigkeiten, weil es nur bei einer sehr groben Temperaturverletzung anschlägt. Da die Temperaturänderungen gegenüber der Motorregelung sehr langsam sind, bedeutet eine solche Überwachung für die Steuerung/Regelung keine nennenswerte zusätzliche Rechenzeitbelastung.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier vorgelegten Beschreibung lassen sich damit kurz wie folgt zusammenfassen: Es wird ein Verfahren zur Temperaturüberwachung eines Elektromotors 10 angegeben, das auf der rechnerischen Ermittlung eines Widerstandswerts für eine Wicklung des Stators oder Ankers des Elektromotors 10 bei der jeweiligen Betriebssituation, also unter Einfluss der jeweiligen Betriebstemperatur des Elektromotors 10, basiert. Der so ermittelte Widerstandswert wird mit einem vorgegebenen oder vorgebbaren Widerstandswert, wie er sich beim Betrieb des Elektromotors 10 bei einer Referenztemperatur einstellt, verglichen. Wenn der jeweils aktuelle, also für die momentane Betriebstemperatur ermittelte Widerstandswert den Widerstandswert bei der Referenztemperatur um ein vorgegebenes oder vorgebbares Maß, zum Beispiel um das Zweifache, überschreitet, gilt dies als Detektion einer Temperaturüberschreitung. Auf dieser Basis kann ein Alarmsignal 36 ausgelöst werden und/oder eine automatische Abschaltung des Elektromotors 10 oder eine Reduktion der Leistungsaufnahme erfolgen.

Die Besonderheit des hier vorgestellten Ansatzes besteht damit darin, dass zur Überwachung der Temperatur eines Elektromotors 10 ohne Temperatursensor nicht mehr versucht wird, die Temperatur an einigen ausgewählten Stellen nachzubilden, denn dies ist unter Umständen nicht zuverlässig möglich, wie dies eingangs am Beispiel eines ausgefallenen Lüfters erläutert wurde. Stattdessen wird automatisch erkannt, dass sich der Elektromotor 10 in einem Zustand befindet, welcher im Normalbetrieb nicht auftritt, sondern nur bei überhöhten Temperaturen auftreten kann. Dazu werden ausschließlich Werte verwendet, die in der jeweiligen Steuerungseinrichtung, also zum Beispiel im Stromrichter 24, ohnehin zur Verfügung stehen.

## Patentansprüche

1. Verfahren zur Überwachung eines Elektromotors (10), wobei die an dem Elektromotor (10) anliegende Klemmspannung bekannt ist, wobei aus einer jeweiligen Motordrehzahl und einem magnetischen Fluss im Elektromotor (10) eine induzierte Spannung ermittelt wird,
wobei mit einer Differenz aus der ermittelten induzierten Spannung und der Klemmspannung sowie einem von dem Elektromotor (10) jeweils aufgenommenen Strom ein Stator- oder Ankerwiderstand des Elektromotors (10) ermittelt wird,
wobei der ermittelte Stator- oder Ankerwiderstand mit einem entsprechenden Widerstandswert, welcher sich bei einer Referenztemperatur des Elektromotors (10) einstellt, verglichen wird und
wobei sich der Elektromotor in einem unerlaubten Zustand befindet, wenn der ermittelte Stator- oder Ankerwiderstand den Widerstandswert bei der Referenztemperatur um ein vorgegebenes oder vorgebbares Maß überschreitet
und wobei ein Alarmsignal (36) ausgelöst wird, wenn der ermittelte Widerstand den Widerstandswert bei der Referenztemperatur um das vorgegebene oder vorgebbare Maß überschreitet.

2. Verfahren nach Anspruch 1, wobei das Alarmsignal (36) ausgelöst wird, wenn der ermittelte Widerstand den Widerstandswert bei der Referenztemperatur um das mehrfache überschreitet.

3. Computerprogramm (34) mit Programmcodemitteln, um alle Schritte von jedem beliebigen der Ansprüche 1 oder 2 durchzuführen, wenn das Computerprogramm (34) auf einer Steuerungseinrichtung für einen Elektromotor (10) ausgeführt wird.

4. Computerprogrammprodukt mit Programmcodemitteln, die auf einem computerlesbaren Datenträger gespeichert sind, um das Verfahren nach einem der Ansprüche 1 oder 2 durchzuführen, wenn das Computerprogrammprodukt auf einer Steuerungseinrichtung für einen Elektromotor (10) ausgeführt wird.

5. Steuerungseinrichtung für einen Elektromotor (10) mit einer Verarbeitungseinheit (28) und einem Speicher (30), in den ein Computerprogramm (34) nach Anspruch 3 geladen ist, das im Betrieb der Steuerungseinrichtung durch die Verarbeitungseinheit (28) ausgeführt wird.

6. Steuerungseinrichtung nach Anspruch 5 in Form eines digitalen Stromrichters (24).

7. Elektromotor (10) mit einer Steuerungseinrichtung nach einem der Ansprüche 5 oder 6.

## Claims

1. Method for monitoring an electric motor (10), wherein the terminal voltage applied to the electric motor (10) is known, wherein an induced voltage is determined from a respective motor speed and a magnetic flux in the electric motor (10), wherein a stator or armature resistance of the electric motor (10) is determined with a difference from the determined, induced voltage and the terminal voltage and a current received from the electric motor (10) in each case,
wherein the determined stator or armature resistance is compared with a corresponding resistance value, which develops with a reference temperature of the electric motor (10) and wherein the electric motor is in a non-permitted state, when the determined stator or armature resistance exceeds the resistance value by a predetermined or predeterminable amount in the case of the reference temperature
and wherein an alarm signal (36) is triggered when the determined resistance exceeds the resistance value by the predetermined or predeterminable degree in the case of the reference temperature.

2. Method according to claim 1, wherein the alarm signal (36) is triggered when the determined resistance exceeds the resistance value by the multiple in the case of the reference temperature.

3. Computer program (34) with program code means, in order to carry out all steps of any of claims 1 or 2, when the computer program (34) is executed on a control facility for an electric motor (10).

4. Computer program product with program code means which are stored on a computer-readable data carrier in order to carry out the method according to one of claims 1 or 2, when the computer program product is executed on a control facility for an electric motor (10).

5. Control facility for an electric motor (10) with a processing unit (28) and a memory (30), into which a computer program (34) according to claim 3 is loaded, which is carried out during operation of the control facility by the processing unit (28).

6. Control facility according to claim 5 in the form of a digital converter (24).

7. Electric motor (10) with a control facility according to one of claims 5 or 6.

## Revendications

1. Procédé de contrôle d'un moteur (10) électrique,
dans lequel la tension aux bornes du moteur (10) électrique est connue,
dans lequel on détermine une tension induite à partir d'une vitesse de rotation du moteur et d'un flux magnétique dans le moteur (10) électrique,
dans lequel, par une différence entre la tension induite déterminée et la tension aux bornes, ainsi que par un courant absorbé par le moteur (10) électrique, on détermine une résistance de stator ou d'induit du moteur (10) électrique,
dans lequel on compare la résistance de stator ou d'induit, qui a été déterminée, à une valeur de résistance correspondante, qui s'établit à une température de référence du moteur (10) électrique et
dans lequel le moteur électrique se trouve dans un état non autorisé, si la résistance de stator ou d'induit, qui a été déterminée, dépasse la valeur de résistance à la température de référence d'un montant donné à l'avance ou qui peut l'être
et dans lequel on déclenche un signal (36) d'alerte, si la résistance déterminée dépasse la valeur de résistance à la température de référence du montant donné à l'avance ou qui peut l'être.

2. Procédé suivant la revendication 1, dans lequel on déclenche le signal (36) d'alerte, si la résistance, qui a été déterminée, dépasse la valeur de résistance à la température de référence de plusieurs fois.

3. Programme (34) d'ordinateur, comprenant des moyens de code de programme pour effectuer tous les stades de l'une quelconque des revendications 1 ou 2, lorsque le programme (34) d'ordinateur est réalisé sur un dispositif de commande d'un moteur (10) électrique.

4. Produit de programme d'ordinateur ayant des moyens de code de programme, qui sont mis en mémoire sur un support de données déchiffrable par ordinateur, pour effectuer le procédé suivant l'une des revendications 1 ou 2, lorsque le produit de programme d'ordinateur est réalisé sur un dispositif de commande d'un moteur (10) électrique.

5. Dispositif de commande d'un moteur (10) électrique, comprenant une unité (28) de traitement et une mémoire (30), dans laquelle est chargé un programme (34) d'ordinateur suivant la revendication 3, qui, lorsque le dispositif de commande est en fonctionnement, est effectué par l'unité (28) de traitement.

6. Dispositif de commande suivant la revendication 5 sous la forme d'un convertisseur (24) numérique.

7. Moteur (10) électrique ayant un dispositif de commande suivant l'une des revendications 5 ou 6.
